# EUROPÄISCHE PATENTANMELDUNG

(11) **EP 1 595 444 A1**
(43) Veröffentlichungstag der Anmeldung: **16.11.2005**
(21) Anmeldenummer: 05009957.1
(22) Anmeldetag: 06.05.2005
(51) Int. Cl.: A01F 15/07

(54) **Maschine zum Aufnehmen und Pressen von landwirtschaftlichem Erntegut**

(30) Priorität: 11.05.2004 DE 102004023703
(71) Anmelder: Maschinenfabrik Bernard Krone GmbH, 48480 Spelle (DE)
(72) Erfinder: Krone, Bernard, Dr.-Ing.E.h., 48480 Spelle (DE); Martensen, Klaus, Dr.-Ing., 48477 Hörstel (DE); Wilmes, August, Dipl.-Ing, 48477 Hörstel (DE); van Bassen, Alois, 49832 Freren (DE)

(57) **Zusammenfassung**

Maschine zum Aufnehmen und Pressen von landwirtschaftlichem Erntegut, wie beispielsweise Heu, Gras oder dgl., mit einer von zumindest einer Ballenformeinrichtung (2) gebildeten, aufklappbaren Wickelkammer (3) zur Erzeugung eines rollenförmigen Ballens, wobei die Ballenformeinrichtung (2) über zumindest eine ortsfeste Antriebsrolle (7) geführt ist und während einer Ballenformphase eine Wickelkammer (3) ausgebildet, welche sich von einer ein geringes Volumen an Erntegut aufnehmenden Größe in eine ein größeres Volumen aufnehmende Größe ausdehnen kann, mit einem Speicher (14) zum Ausgleich des überschüssigen Teils der Ballenformeinrichtung (2), wobei der Speicher (14) ein Stellmittel (22) umfasst, welches nach der Ballenformphase die weitere, zur Ausdehnung der Wickelkammer (3) erforderliche Freigabe von Teilen der Ballenformeinrichtung (2) begrenzt und dass nach der Ballenformphase eine Verdichtungsphase einleitbar ist, in der eine Verdichtungskraft von außen nach innen ausgeübt wird.

## Beschreibung

Die Erfindung betrifft eine Maschine zum Aufnehmen und Pressen von landwirtschaftlichem Erntegut mit einer zumindest eine Ballenformeinrichtung aufweisenden Wickelkammer zu Erstellung eines Erntegutballens und mit einem mit einer Umlenkrolle versehenen Speicher, welcher die Ballenformeinrichtung über die Umlenkrolle kraftbeaufschlagt und bei wachsendem Ballen ein Teil der Ballenformeinrichtung abgibt.

Aus der EP 0 121 279 A2 ist eine Maschine der eingangs genannten Art bekannt, die einen Erntegutballen herstellen kann, dessen Kern vergleichsweise weich, dessen äußere Schicht jedoch hart genug ist, um dem Erntegutballen eine feste Form zu geben. Nachteilig bei diesem Stand der Technik ist es, dass hier keine Ballen verschiedener Größen hergestellt werden können.

Es ist daher Aufgabe der vorliegenden Erfindung, eine Maschine zum Aufnehmen und Pressen von landwirtschaftlichen Erntegut zu verbessern und insbesondere zur Erzeugung variabler Ballengrößen auszubilden.

Die Aufgabe wird gelöst durch eine Maschine nach dem Oberbegriff des Anspruchs 1, bei der der Speicher zumindest ein Stellmittel umfasst, das unmittelbar nach dem Abschluss der Ballenformphase des sich bildenden Erntegutballens die weitere Freigabe der Ballenformeinrichtung unter Aufbau eines Pressdrucks auf den Erntegutballen begrenzt.

Das Stellmittel, welches für die Vorgabe eines Ballendurchmessers des Erntegutballens ausgebildet ist, trägt vorteilhafterweise dafür Sorge, dass erst dann ein wesentlicher Pressdruck auf den Erntegutballen ausgeübt wird, wenn nach der Ballenformphase eine weitere Freigabe von Teilen der Ballenformeinrichtung aus dem Speicher unterbunden wird und weiterhin Erntegut in die Wickelkammer eingebracht wird.

Bei einer derartig ausgestalteten Maschine bleibt vorteilhafterweise ein weicher Emtegutballenkern erhalten, während der Einsatzbereich der Maschine aufgrund der zusätzlichen Variabilität des Erntegutballendurchmessers deutlich vergrößert wird. Die erfindungsgemäße Maschine kann also sowohl mit einem festen Erntegutballendurchmesser ähnlich wie bei einer herkömmlichen Festkammermaschine arbeiten, als auch eine Mehrzahl von unterschiedlich großen Festkammermaschinen aufgrund ihrer Variabilität ersetzen.

Beispielsweise kann das Stellmittel als einfaches mechanisches Element ausgebildet sein, womit sich die Herstellungskosten gegenüber den ebenso benutzbaren hydraulischen, elektromotorischen oder pneumatischen Elementen verringern lassen.

Vorteilhafterweise ist das Stellmittel lageveränderlich angeordnet und weist ein Begrenzungselement auf. Dies ist vorzugsweise ein mechanisches Stellmittel, das durch Einnahme verschiedener Positionen bei einem wachsendem Erntegutballen bis zur Anlage an einem Begrenzungselement die Freigabe von Teilen der Ballenformeinrichtung nicht begrenzt. Es kann sich aber beispielsweise auch um einen Hydraulikzylinder handeln, der unter Vermeidung eines wesentlichen Pressdrucks auf den wachsenden Erntegutballen erst bei Erreichen des vorgegebenen Ballens, d.h. bei einer durch ein Begrenzungselement definierten Stellung Pressdruck aufbaut.

Zur sicheren Abstützung der bei fortgeführter Zuführung von Erntegut in die Wickelkammer und gleichzeitiger Begrenzung der Freigabe der Ballenformeinrichtung auftretenden Pressdrücke weist das Stellmittel bevorzugt eine gehäusefeste Abstützung auf, wobei das Begrenzungselement zumindest einen Bereich umfasst, der für einen direkten oder indirekten Eingriff mit der gehäusefesten Abstützung ausgebildet ist. Hierdurch ist gewährleistet, dass das die Ballenformeinrichtungsfreigabe begrenzende Begrenzungselement die gegen den Pressdruck gerichteten Kräfte, die auf die Ballenformeinrichtung wirken, in das Maschinengehäuse überführt werden. Bei stabiler Konstruktion wird damit eine hohe Betriebssicherheit erreicht.

Zur weitgehenden Vermeidung von Schlupf zwischen der Ballenformeinrichtung und der Antriebsrolle ist der Speicher außerdem vorzugsweise so ausgebildet, dass er gegen die Kraftbeaufschlagung der Ballenformeinrichtung durch eine Spannvorrichtung des Speichers bei gleichzeitig nur unwesentlichem Pressdruck auf den sich bildenden Erntegutballen solange die Ballenformeinrichtung freigibt, bis der vorgegebene Ballendurchmesser direkt oder fast erreicht ist und sich dann erst aufgrund der Wirkstellung des Stellmittels der Pressdruck um ein Vielfaches erhöht. Dadurch liegt die Ballenformeinrichtung während einer ersten Ballenformphase an dem in die Wickelkammer eingeführten Material an und sorgt somit für eine sichere Rotation und damit eine gleichmäßige Ballenbildung des Erntegutballens.

Weitere Vorteile und Einzelheiten der Erfindung ergeben sich aus den übrigen Unteransprüchen sowie den nachfolgend beschriebenen schematischen Darstellungen. In der Zeichnung zeigt:
- Figur 1:: Einen Längsschnitt einer erfindungsgemäßen Maschine mit einer einen minimalen Erntegutballen ermöglichenden Wirkstellung des Stellmittels,
- Figur 2:: den Gegenstand nach Figur 1 in einer einen maximalen Erntegutballen ermöglichenden Wirkstellung,
- Figur 3:: ein Stellmittel des Speichers der Ballenformeinrichtung gemäß Figur 1,
- Figur 4:: ein Stellmittel des Speichers der Ballenformeinrichtung gemäß Figur 2,
- Figur 5:: eine Perspektivdarstellung des Stellmittels.

Eine erfindungsgemäße Maschine 1 zum Aufnehmen und Pressen von landwirtschaftlichem Erntegut weist eine Ballenformeinrichtung 2 auf, die eine Wickelkammer 3 ausbildet. Die Wickelkammer 3 besitzt eine Einlassöffnung 4, durch die allgemein mit einer Aufnahmevorrichtung 6 aufgenommenes Erntegut wie beispielsweise Heu oder Anwelkgut in die Wickelkammer 3 befördert werden kann. Eine Antriebsrolle 7 unterteilt die Ballenformeinrichtung 2 in ein Lasttrum 8 und ein Leertrum 9, wobei sich das Lasttrum 8 von dem Leertrum 9 durch die auf den Erntegutballen übertragenen Antriebskräfte unterscheidet. Beiderseits der Einlassöffnung 4 angeordnete Walzen 11 begrenzen zusätzlich die Wickelkammer 3. Zu Beginn eines Ballenformvorgangs liegt das Lasttrum 8 der Ballenformeinrichtung 2 weiterhin an eine Startkammer ausbildende Führungsvorrichtungen 12 an. Bei diesem Ausführungsbeispiel sind die Führungsvorrichtungen 12 als Umlenkrollen ausgebildet, es kann sich hierbei jedoch auch um eine oder mehrere Führungsflächen handeln.

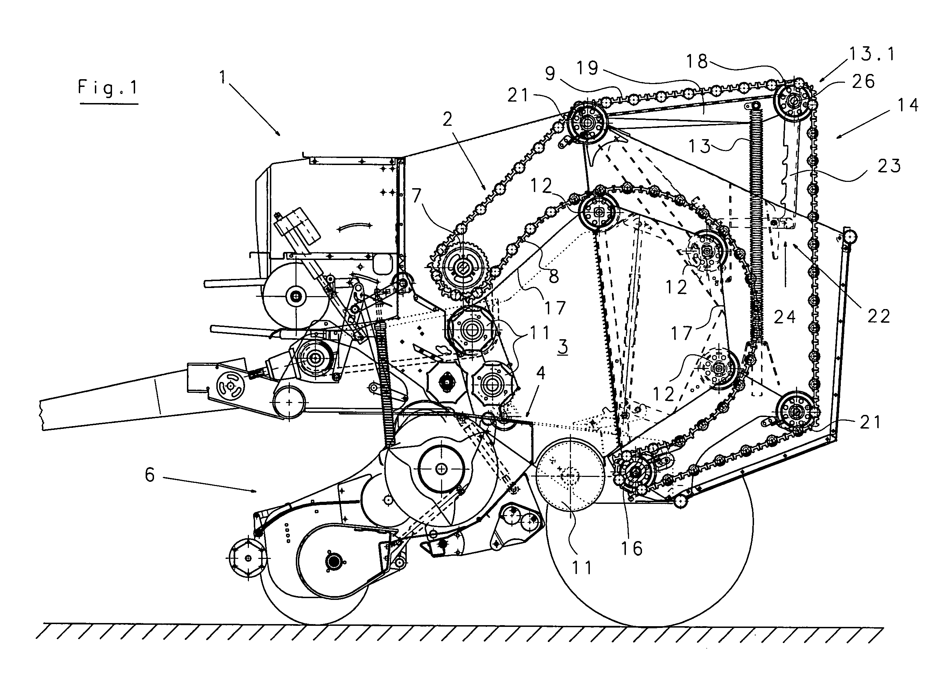

Die Ballenformeinrichtung 2 wird mit Hilfe einer Spannvorrichtung 13.1 unter Spannung gehalten, wobei die Spannvorrichtung 13.1 einen Speicher 14 zur Aufnahme bzw. Abgabe von Teilen der Ballenformeinrichtung 2 umfasst und durch einen Kraftspeicher 13 mit einer Kraft beaufschlagt werden kann, welche eine nahezu schlupffreie Übertragung des erforderlichen Antriebsmomentes zwischen der Antriebsrolle 7 und der Ballenformeinrichtung 2 sicherstellt. Dadurch liegen die zwischen der Antriebsrolle 7 und einer Umlenkrolle 16 befindlichen Abschnitte des Lasttrums 8 der Ballenformeinrichtung 2, anders als in Figur 1 dargestellt, zu Beginn des Erntegutballenformvorgangs parallel zu den Seitenkanten 17 der die Wickelkammer 3 begrenzten Führungsseitenwände. Der Speicher 14 umfasst im wesentlichen einen mit einer Umlenkrolle 18 versehenen Spannarm 19, an den der als Federelement ausgebildete Kraftspeicher 13 angreift. Füllt sich die Wickelkammer 3, so wird von dem Erntegut ein nach außen gerichteter Druck auf das Lasttrum 8 ausgeübt und das Federelement 13 wird gestaucht. Dabei ändert sich die zwischen den Umlenkrollen 21 und 18 befindlicher vertikaler Abschnitt der Ballenformeinrichtung 2 und die Erntegutballenvergrößerung geht einher mit einer Vergrößerung der Wickelkammer 3.

Der Speicher 14 weist ein mit 22 bezeichnetes Stellmittel auf, welches ein Begrenzungselement 23 und ein Widerlager 24 als gehäusefeste Abstützung umfasst.

In der in Figur 1 dargestellten Wirkstellung des Begrenzungselements 23 greift das Widerlager 24 in eine Ausnehmung am unteren Ende des Begrenzungselements 23 ein. Hierdurch wird die weitere Freigabe der Ballenformeinrichtung 2 aus dem Speicher 14 verhindert, so dass es zur Ausbildung eines minimalen Erntegutballens kommt. Die vorher von dem Kraftspeicher 13, der hier ein Federelement ist, auf die Ballenformeinrichtung 2 ausgeübte Kraft wirkt nun nur noch zusätzlich, da das Stellmittel die weitere Kontraktion des Kraftspeichers wie weiter unten beschrieben weitestgehend verhindert.

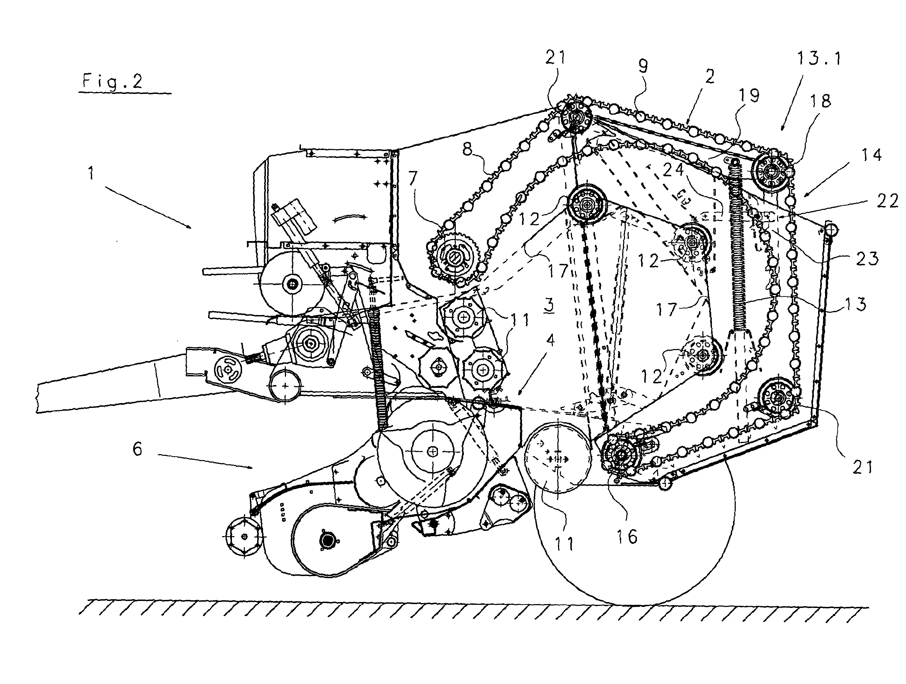

Aufgrund einer geringfügig geänderten Position des Begrenzungselements 23 befindet sich in Figur 2 das Widerlager 24 in Eingriff mit einem weiter oben befindlichen Bereich des Begrenzungselements 23. Dadurch kann der Kraftspeicher 13 weiter kontraktieren und der Speicher 14 gibt mehr von der Ballenformeinrichtung 2 frei, so dass ein größerer Erntegutballen in der Wickelkammer 3 gebildet werden kann.

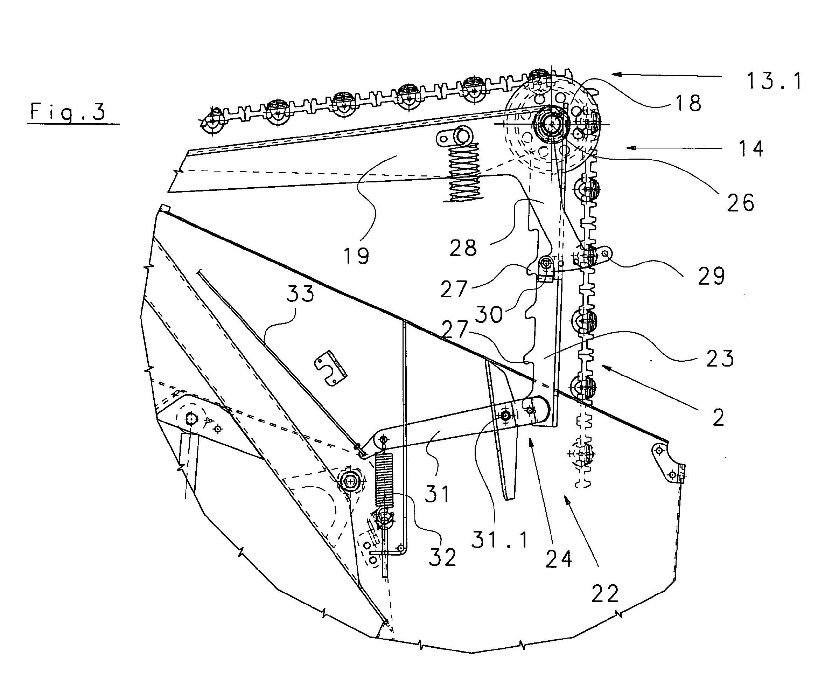

In Figur 3 ist das Stellmittel 22 des Speichers 14 deutlicher dargestellt. Um eine zuverlässige Abstützung der auftretenden Kräfte am Gehäuse der Maschine 1 zu gewährleisten, ist das Begrenzungselement 23 auf beiden Seiten im Bereich der Umlenkrolle 18 des Spannarms 19 angeordnet. Dieses ist vorteilhaft, da die auf den Spannarm 19 einwirkenden Kräfte von der Ballenformeinrichtung 2 über die Umlenkrolle 18 geleitet werden. Gleichzeitig ist das Begrenzungselement 23 um eine Achse 26, die der Drehachse der Umlenkrolle 18 entspricht, verschwenkbar. Die an der Ballenformeinrichtung anliegenden Kräfte werden so zum einen durch den Spannarm 19, zum anderen durch das Begrenzungselement 23 optimal abgestützt.

Bei den unterschiedlichen Winkeln, die das Begrenzungselement 23 relativ zum Spannarm 19 einnehmen kann, gelangt das Begrenzungselement 23 in den unterschiedlichen von den Nasen 27 ausgebildeten Bereichen in Anlage mit dem Widerlager 24. Entsprechend werden unterschiedliche Längen der Ballenformeinrichtung 2 freigegeben und es baut sich ein Pressdruck erst bei unterschiedlichen vorgegebenen Ballendurchmessern auf.

Das Stellmittel 22 weist in dem in Figur 3 beschriebenen Ausführungsbeispiel zusätzlich einen Stellarm 28 mit Ausnehmungen 29 auf, die für eine Arretierung des Begrenzungselements 23 in den beschriebenen unterschiedlichen Winkelpositionen bezüglich des Spannarms 19 Sorge tragen. Hierfür greift eine Befestigung 30, die am Begrenzungselement 23 angebracht ist, lösbar in die Ausnehmungen 29 ein und arretiert somit das Begrenzungselement 23 in den verschiedenen Positionen.

Das Widerlager 24 weist weiterhin einen Hebelarm 31 mit Schwenkachse 31.1 auf, der zusammen mit einer am Gehäuse festgelegten Feder 32 die gehäusefeste Abstützung bildet. Durch die Feder 32 ist eine Beweglichkeit des Hebelarms 31 gewährleistet, so dass innerhalb eines vorgebbaren Bereiches mit Hilfe von mechanischen, elektromechanischen oder auch anderen Mitteln der auf den Erntegutballen wirkende Pressdruck überprüft werden kann. Dieses dient beispielsweise einer gleichmäßigen Ausbildung des Erntegutballens, da die erfindungsgemäße Maschine 1 auf in Fahrtrichtung beiden Seiten des Erntegutballens die beschriebenen Stellmittel mit gehäusefesten Abstützungen aufweist und somit eine Anzeige für den auf den verschiedenen Seiten lastenden Pressdruck ermöglicht.

Somit ist in dem hier dargestellten Ausführungsbeispiel mit Hilfe einer auf Zugkraft basierenden Übermittlungsvorrichtung 33 eine Anzeige des Pressdrucks für den Betreiber der erfindungsgemäßen Maschine 1 möglich.

Die Veränderung der Länge der Ballenformeinrichtung, die aufgrund der Feder 32 auch bei Erreichen der Anschlagsstellung eintritt, ist bei der Größe des sich bildenden Erntegutballens vernachlässigbar, so dass bereits bei Erreichen der In-Eingriff-Stellung unmittelbar vor Erreichen des vorgebbaren Durchmessers aufgrund der praktisch nicht wahrnehmbaren weiteren Durchmesseränderung von dem Erreichen des vorgebbaren Erntegutballendurchmessers gesprochen werden kann.

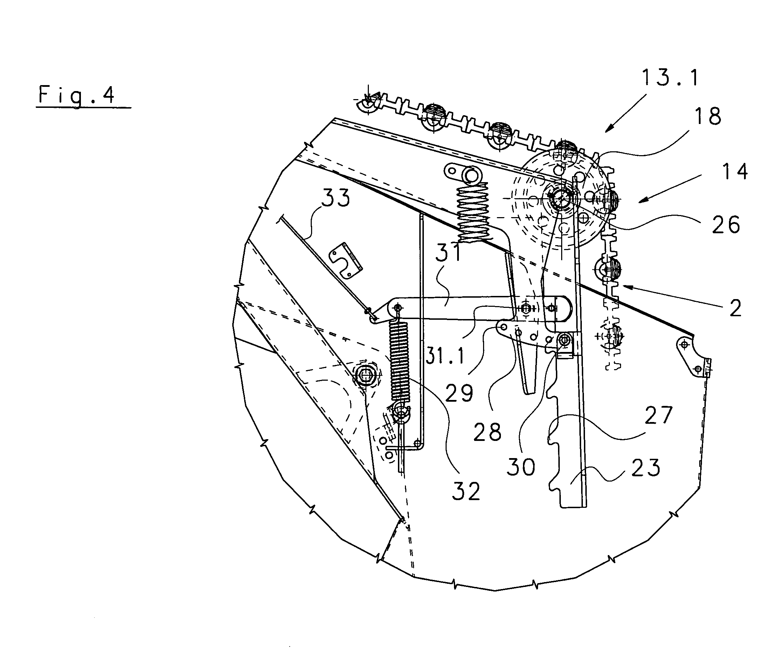

In der in Figur 4 abgebildeten Darstellung des Stellmittels ist eine Maximalposition des Begrenzungselements 23 gezeigt, in der das Widerlager 24 in Eingriff mit der obersten, durch die Nase 27 gebildeten Ausnehmung steht. Dieses entspricht bei dem hier dargestellten Ausführungsbeispiel einem maximalen Erntegutballendurchmesser, wie er in Figur 2 durch den großen Umfang der Ballenformeinrichtung 2 in der Wickelkammer 3 angedeutet ist.

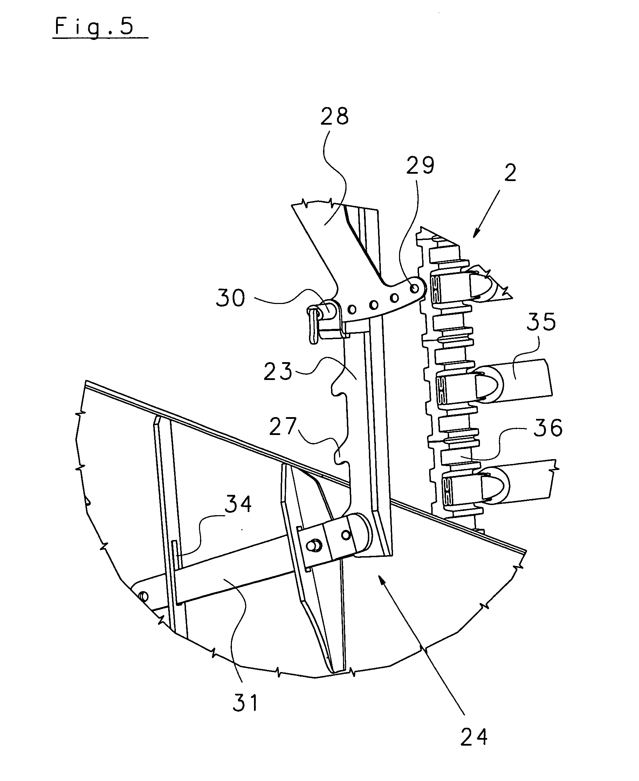

In der Perspektivdarstellung in Figur 5 ist gezeigt, dass der Hebelarm 31 in einer Kulisse 34 geführt ist, die ein zusätzliches Sicherungselement für ein mögliches Versagen der Feder 32 bildet.

Trotz der unterschiedenen Ballendurchmesser befindet sich das Begrenzungselement 23 vorwiegend in einem Winkel in einem Bereich um 90° zum Spannarm 19. Hierdurch wird zwischen Anlagepunkt des Begrenzungselements 23 am Widerlager 24, der Umlenkrolle 18 und der Drehachse des Spannarms 19 (Figur 1) ein Stützdreieck ausgebildet, welches die auf die Umlenkrolle 18 von der Ballenformeinrichtung 2 ausgeübte Kraft zum Widerlager 24 und zur Drehachse des Spannarms 19 überträgt und somit eine optimale Stützsicherheit gewährleistet. Das Begrenzungselement 23 muss daher lediglich in der vertikal zum Untergrund ausgerichteten Richtung besonders tragfähig sein.

Wie in Figur 5 ebenfalls erkennbar ist, umfasst die Ballenformeinrichtung 2 an den Enden eingefaltete Hohlprofile 35, die von nicht näher dargestellten Nieten auf einem Tragriemen 36 angeordnet sind. Bevorzugterweise ist der Tragriemen 36 aus einem geschmeidigen und doch wenig längenveränderlichen Material, um eine sichere Anlage und Übertragung des Antriebsmomentes an der Umlenkrolle 18 zu erreichen und um weiterhin eine langlebige Einsatzdauer sicher zu stellen.

## Patentansprüche

1. Maschine zum Aufnehmen und Pressen von landwirtschaftlichem Erntegut, wie beispielsweise Heu, Gras oder dgl., mit einer von zumindest einer Ballenformeinrichtung (2) gebildeten, aufklappbaren Wickelkammer (3) zur Erzeugung eines rollenförmigen Ballens, wobei die Ballenformeinrichtung (2) über zumindest eine ortsfeste Antriebsrolle (7) geführt ist und während einer Ballenformphase eine Wickelkammer (3) ausgebildet, welche sich von einer ein geringes Volumen an Erntegut aufnehmenden Größe in eine ein größeres Volumen aufnehmende Größe ausdehnen kann, mit einem Speicher (14) zum Ausgleich des überschüssigen Teils der Ballenformeinrichtung (2), **dadurch gekennzeichnet, dass** der Speicher (14) ein Stellmittel (22) umfasst, welches nach der Ballenformphase die weitere, zur Ausdehnung der Wickelkammer (3) erforderliche Freigabe von Teilen der Ballenformeinrichtung (2) begrenzt und dass nach der Ballenformphase eine Verdichtungsphase einleitbar ist, in der eine Verdichtungskraft von außen nach innen ausgeübt wird.

2. Maschine nach Anspruch 1, **dadurch gekennzeichnet, dass** das Stellmittel (22) lageveränderlich angeordnet ist und ein Begrenzungselement (23) aufweist.

3. Maschine nach Anspruch 1 oder 2, **dadurch gekennzeichnet, dass** das Stellmittel (22) eine gehäusefeste Abstützung (24) aufweist.

4. Maschine nach Anspruch 3, **dadurch gekennzeichnet, dass** das Begrenzungselement (23) zumindest einen Bereich aufweist, der zum direkten oder indirekten Eingriff mit der gehäusefesten Abstützung (24) ausgebildet ist.

5. Maschine nach Anspruch 4, **dadurch gekennzeichnet, dass** die zum Eingriff mit der gehäusefesten Abstützung (24) ausgebildeten Bereiche Ausnehmungen (29) und/oder Anformungen sind.

6. Maschine nach einem der Ansprüche 1 bis 5, **dadurch gekennzeichnet, dass** das Stellmittel (22) zumindest teilweise im Bereich der Umlenkrolle (18) angeordnet ist.

7. Maschine nach einem der Ansprüche 1 bis 6, **dadurch gekennzeichnet, dass** das Stellmittel (22) teilweise um eine Achse quer zu einem Spannarm (19) des Speichers (14) schwenkbar ist.

8. Maschine nach Anspruch 7, **dadurch gekennzeichnet, dass** zumindest ein schwenkbarer Teil des Stellmittels (22) in durch verschiedene Winkel relativ zum Spannarm (19) **gekennzeichneten** Positionen feststellbar ist.

9. Maschine nach einem der Ansprüche 1 bis 8, **dadurch gekennzeichnet, dass** ein Spannarm (19) des Speichers (14) zur optimalen Abstützung der im Begrenzungsfall auftretenden Kräfte mit dem Begrenzungselement (23) ein Stützdreieck ausbildet, wobei die Umlenkrolle (18) in etwa an dem Ende des Spannarms (19) angeordnet ist.

10. Maschine nach einem der Ansprüche 1 bis 9, **dadurch gekennzeichnet, dass** der Speicher (14) während der Ballenformphase mit einer nachgiebig ausgebildeten Spannvorrichtung zusammenwirkt, über die eine zumindest annähernd schlupffreie Übertragung des während der Ballenformphase erforderlichen Antriebsmomentes von der zumindest einen Antriebsrolle (7) auf die Ballenformeinrichtung (2) erreichbar ist und dass nach der Ballenformphase auf den Ballen in der Wickelkammer (3) eine nach einem einstellbaren größeren Volumen aufbaubare Verdichtungskraft von außen nach innen ausgeübt wird.

11. Maschine nach Anspruch 10, **dadurch gekennzeichnet, dass** die Spannvorrichtung (13.1) zumindest einen Kraftspeicher (13) aufweist.

12. Maschine nach Anspruch 11, **dadurch gekennzeichnet, dass** der Kraftspeicher (13) ein Federelement ist.

13. Maschine nach einem der Ansprüche 10 bis 12, **dadurch gekennzeichnet, dass** der Speicher (14) zumindest einen Spannarm (19) mit einer Umlenkrolle (18) aufweist.

14. Maschine nach Anspruch 13, **dadurch gekennzeichnet, dass** die Umlenkrolle (18) in Fahrtrichtung vor dem hinteren Ende der Maschine (1) angeordnet ist.

15. Maschine nach einem der Ansprüche 14 oder 15, **dadurch gekennzeichnet, dass** die Umlenkrolle (18) in Fahrtrichtung hinter dem Zentrum des sich bildenden Erntegutballens angeordnet ist.
